# EUROPÄISCHE PATENTSCHRIFT

(11) **EP 2 090 801 B1**
(45) Veröffentlichungstag und Bekanntmachung des Hinweises auf die Patenterteilung: **14.12.2011**
(21) Anmeldenummer: 09151290.5
(22) Anmeldetag: 26.01.2009
(51) Int. Cl.: F16F 9/04, F16F 9/05

(54) **Luftfeder-Rollbalg**
Pneumatic spring rollIing bellows
Soufflet roulant d'un ressort pneumatique

(30) Priorität: 18.02.2008 DE 102008009795
(43) Veröffentlichungstag der Anmeldung: 19.08.2009
(73) Patentinhaber: Continental Teves AG & Co. OHG, 60488 Frankfurt (DE)
(72) Erfinder: Rosner, Dirk, 30826 Garbsen (DE)

(56) Entgegenhaltungen:
- DE-A1- 10 323 332
- DE-A1-102006 012 002
- DE-A1-102007 004 035
- US-A- 4 325 541
- US-A- 4 763 883
- US-A1- 2006 208 403

## Beschreibung

Die Erfindung betrifft einen Luftfeder-Rollbalg, der zwischen zwei Anschlussteilen befestigt ist und unter Befüllung mit Druckluft eine einem Anschlussteil benachbarte Rollfalte und eine sich daran anschließende Luftfederkammer ausbildet.

Solche Luftfeder-Rollbälge sind bekannt uns werden häufig zur anpassbaren Luftfederung von Personenkraftwagen, Lastkraftwagen oder Eisenbahnwagons eingesetzt. Auch sind Anwendungen im Bereich von Maschinen- oder Fundamentlagerungen bekannt.

Ein Rollbalg für eine Luftfeder eines Personenkraftwagens besteht in der Regel aus Elastomerwerkstoffen mit Verstärkungselementen und weist dabei üblicherweise nach seiner Herstellung an seinen beiden Enden unterschiedliche Durchmesser auf, nämlich kleineren Durchmesser für den Anschluss/die Verbindung am Luftfederkolben und einen größeren Durchmesser für den Anschluss am Luftfederdeckel. Meistens ist der Luftfederkolben am Fahrwerk angeschlossen und der Luftfederdeckel an der Karosserie. Ein solcher Rollbalg besitzt daher üblicherweise an seinen Enden eine etwa zylindrische Form und in seinem Mittelteil eine leicht konische Ausbildung.

Ein Rollbalg wird zunächst als zylindrischer Körper aus mehreren Gummilagen und Lagen von - teilweise gummierten - Festigkeitsträgern so konfektioniert, d.h. zusammengebaut, dass ein Schlauch mit ggf. mehreren im Gummi eingebundenen Lagen von Festigkeitsträgern entsteht. Die Festigkeitsträger sind in ihren Lagen in einem Winkel, nämlich im sogenannten Fadenwinkel zur Achse bzw. zur Achsnormalen des zylindrischen Körpers ausgerichtet. Dabei sind weiterhin oft die Festigkeitsträger in benachbarten Lagen zueinander gekreuzt angeordnet, also einmal zur einen und einmal zur anderen Seite bezogen auf die Achse winklig ausgerichtet. In einer Abwicklung der Festigkeitsträgerlagen des Zylinders ergäbe sich dann also eine gekreuzte Anordnung der Festigkeitsträger, die bei z.B. nur zwei Festigkeitsträgerlagen einem Jägerzaun ähneln würde.

Der Fadenwinkel lässt sich, wie bereits angedeutet, in Bezug auf die Achse unterschiedlich definieren, wird aber hier als der Winkel verstanden, der sich zwischen der Senkrechten, d.h. der Normalen zur Balgachse und den Festigkeitsträgern ergibt.

Nach der Konfektion wird der Rollbalg konisch aufgeweitet und vulkanisiert. Bei diesem Herstellungsschritt werden auch die unterschiedlichen Durchmesser erzeugt und durch den in der Wärme erfolgende Vulkanisationsprozess fixiert. Wie oben bereits dargestellt, sind der kleinere Durchmesser für den Anschluss an den Luftfederkolben und der größere Durchmesser für den Anschluss an den Luftfederdeckel vorgesehen.

Im Betriebszustand, d.h. nach dem Einbau des Rollbalges in die Luftfeder und nach deren Befüllung mit Druckluft und bei Belastung bildet der Rollbalg die Rollfalte aus, die ausgehend von dem Anschluss des Rollbalges an den Luftfederkolben in Form eines "Umschlages" auf der Außenseite des Luftfederkolbens, d.h. auf der Abrollkontur abrollt.

Das Balgmaterial im Rollfaltenbereich bewegt sich beim Abrollen des Balges auf der Abrollkontur zwischen dem durch Innendruck aufgeweiteten Durchmessers des mittleren Rollbalgbereiches und - näherungsweise - dem Außendurchmesser des Kolbens / der Abrollkontur hin und her und wird demzufolge sehr stark dynamisch belastet.

Das Balgmaterial in den übrigen Bereichen des Rollbalges ist weit weniger belastet und muss, abgesehen von einwirkenden Querkräften, im Wesentlichen nur die durch den Innendruck in der Luftfeder aufgebaute statische Belastung ertragen.

Damit sind nun die einzelnen Balgbereiche stark unterschiedlichen Belastungen unterworfen. Wenn die Konstruktion des gesamten Rollbalges auf die Belastung in den meistbelasteten Bereichen ausgelegt wird, ergäben sich in den anderen Bereichen eine Überdimensionierung und damit eine unwirtschaftliche Ausbildung. Eine Auslegung ausschließlich auf die niedrig belasteten Bereiche könnte aber zum Versagen des Rollbalges führen.

Eine Lösung dieses Problems besteht im Stand der Technik darin, dass die Festigkeitsträger in den einzelnen Rollbalgbereichen bereits bei der Herstellung der Rollbälge in unterschiedlichen Winkellagen und Dichten eingebracht oder mit Verstärkungen versehen werden. Auch lässt sich die Festigkeit und Steifigkeit des Rollbalgs über seine Länge durch eine Änderung der Dicke der Rollbalgwand beeinflussen.

Die US 2006/0208403 A1 zeigt eine Luftfedereinrichtung mit einer flexiblen Außenführung oder Hülse, die in einer der offenbarten Ausführungen einen zweigeteilten Luftfederbalg aufweist, wobei letzterer aus einem Balgteil und aus einem Rollfaltenteil zusammengesetzt ist. Balgteil und Rollfaltenteil sind über eine Klemmverbindung, die auch die Außenführung fixiert, miteinander verbunden.

Die US 4,763,883 zeigt einen Rollbalg mit einvulkanisierten Verstärkungselementen, die aus mehreren winklig zur Fadenachse angeordneten Fadenlagen bestehen. Der Winkel der Fadenlagen ist über die Balglänge nicht konstant, sondern ändert sich in einzelnen Ringbereichen, d.h. in einzelnen Teilen des Balges, nämlich im Bereich der sogenannten Federkammer, d.h. des mittleren Rollbalgbereiches, oder aber im Bereich der Rollfalte.

Auch wenn mit dieser Maßnahme die Kontur, die Steifigkeit und die Federrate des Balges beeinflusst werden kann, gestaltet sich doch der Herstellvorgang relativ aufwendig.

Für die Erfindung bestand somit die Aufgabe, einen Luftfeder-Rollbalg bereitzustellen, der in seinen unterschiedlichen Bereichen auf die auftretenden Spannungen und Belastungen angepasst werden kann, der damit eine höhere Lastaufnahmefähigkeit bzw. eine höherer Lebensdauer bei gleichen Belastungskollektiven erreichen kann und der einfach und Kostengünstig herzustellen ist.

Gelöst wird diese Aufgabe durch die Merkmale des Hauptanspruchs. Vorteilhafte Weiterbildungen sind in den Unteransprüchen enthalten.

Dabei ist der Rollbalg aus zwei miteinander verbundenen schlauchförmigen Rollbalgteilen zusammengesetzt ist und die Rollbalgteile weisen unterschiedliche Durchmesser auf.

Dabei weist der Rollbalg innerhalb der Rollbalgwand angeordnete Lagen von Festigkeitsträgern auf und die Festigkeitsträger der einzelnen Lagen sind in einem Winkel zur Rollbalgachse ausgerichtet, wobei die Festigkeitsträger der Rollbalgteile unterschiedliche Fadenwinkel aufweisen. Durch die unterschiedlichen Fadenwinkel und/oder auch durch eine unterschiedliche Anzahl von Fadenlagen erreicht man ein unterschiedliches und angepasstes Lastaufnahme- und Steifigkeitsverhalten der einzelnen Rollbalgteile.

Die erfindungsgemäße Lösung besteht also darin, den Rollbalg so auszubilden, dass im Bereich der Rollfalte der Rollbalgdurchmesser so ausgebildet ist, dass sich trotz hoher dynamischer Belastung ein ausgeglichener Spannungszustand beim Abrollen der Rollfalte einstellt, wobei die übrigen und weniger belasteten Bereiche einen anderen Durchmesser aufweisen, und dass zur Realisierung diese Durchmessersprunges in einfachster Weise zwei Rollbalgteile unterschiedlichen Durchmessers miteinander verbunden werden.

Damit ist die Herstellung der Rollbalgteile als solche sehr einfach und kann unter Nutzung einfachster Dorne geschehen. Gleichermaßen ist aber auch die Herstellung des "vollständig zusammengesetzten" Rollbalges sehr einfach und zweckmäßig, da lediglich zwei Rollbalgteile miteinander verbunden werden müssen.

Nach der Erfindung sind die beiden Rollbalgteile mit einer Klemmverbindung miteinander verbunden. Eine solche Klemmverbindung ist einfach zu realisieren und leicht herzustellen. Das gilt auch für eine weitere vorteilhafte Ausbildung, die darin besteht, dass die Klemmverbindung aus einem Klemmring und einem oder mehreren entsprechenden Gegenringen besteht.

Eine vorteilhafte Ausführung besteht darin, dass der größte Durchmesser des einen Rollbalgteils und der kleinste Durchmesser des zweiten Rollbalgteils im Bereich der Verbindung der Rollbalgteile gleichgroß sind. Dies erleichtert die Verbindung dadurch, dass keine besonderen Verformungen der Rollbalgenden vorgenommen werden müssen.

Dabei besteht eine vorteilhafte Ausführung - wie oben bereits ausgeführt - darin, dass ein Rollbalgteil im Bereich der Rollfalte und das zweite Rollbalgteil im Bereich der Luftfederkammer angeordnet ist. In diesen beiden Bereichen sind die größten Belastungsunterschiede vorhanden.

Eine weitere vorteilhafte Ausbildung besteht darin, dass die Rollbalgteile aus unterschiedlichen Gummimaterialien bestehen. Auch durch eine solche entsprechend ausgelegte Materialwahl kann man die Festigkeiten und Steifigkeiten der einzelnen Rollbalgteile gut beeinflussen.

Eine weitere vorteilhafte Ausbildung besteht darin, dass die Klemmverbindung als einteiliger und S-förmiger die jeweiligen Enden der Rollbalgteile (1a, 1b) umfassender Klemmring ausgebildet ist. Hier benötigt man nur ein entsprechend geformtes Ringteil, welches dann in einem Schritt ohne komplizierte Werkzeuge vercrimpt, d.h. radial verpresst werden kann.

Eine weitere vorteilhafte Ausbildung besteht darin, dass die Klemmringe eine Konturierung oder Zahnung aufweisen, um Dichtigkeit und Klemmung zu verbessern.

Eine weitere vorteilhafte Ausbildung besteht darin, dass die Klemmverbindung so ausgebildet ist, dass ein Ende eines Faltenbalges ebenfalls im Verbindungsbereich befestigt ist. Damit erübrigt sich eine separate Befestigung für den Faltenbalg, der oft als Schutz vor Schmutz um einen Luftfederbalg angeordnet ist.

Besonders geeignet ist ein solcher Luftfeder-Rollbalg für die Anwendung in einer Luftfeder für ein Kraftfahrzeug.

Anhand eines Ausführungsbeispieles soll die Erfindung näher erläutert werden. Es zeigen
- Fig. 1: einen erfindungsgemäßen Luftfeder-Rollbalg im Einbauzustand im Schnitt
- Fig. 2: einen vergrößerten Ausschnitt des Verbindungsbereiches der beiden Rollbalgteile eines erfindungsgemäßen Luftfeder-Rollbalgs gemäß Fig. 1 im Schnitt mit einer Klemmverbindung
- Fig. 3: eine weitere Ausführung einer Klemmverbindung gemäß Fig. 2 im Schnitt
- Fig. 4: eine Ausführung einer einteiligen Klemmverbindung der beiden Rollbalgteile eines erfindungsgemäßen Luftfeder-Rollbalgs im Schnitt
- Fig. 5: eine Ausführung einer Klemmverbindung der beiden Rollbalgteile eines erfindungsgemäßen Luftfeder-Rollbalgs mit ebenfalls befestigtem Faltenbalg im Schnitt
- Fig. 6: eine weitere Ausführung einer Klemmverbindung der beiden Rollbalgteile eines erfindungsgemäßen Luftfeder-Rollbalgs mit ebenfalls befestigtem Faltenbalg im Schnitt

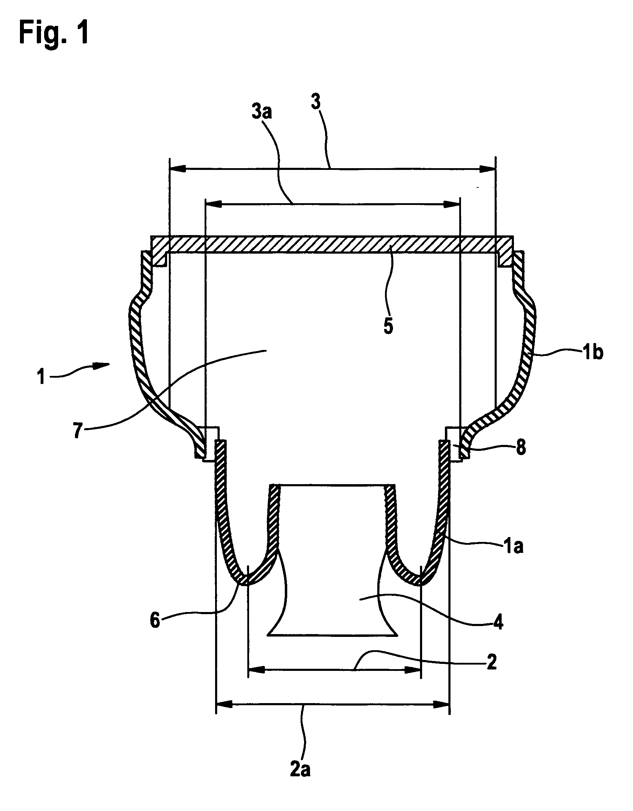

Die Fig. 1 zeigt einen erfindungsgemäßen Luftfeder-Rollbalg 1 nach der Vulkanisation im Einbauzustand im Schnitt. Der Luftfeder-Rollbalg 1 ist aus zwei miteinander verbundenen schlauchförmigen Rollbalgteilen 1a und 1b zusammengesetzt. Die Rollbalgteile 1a und 1b weisen unterschiedliche Durchmesser auf, nämlich unterschiedliche wirksame Durchmesser 2 und 3 sowie auch unterschiedliche tatsächliche und variable Durchmesser, wie die Fig. 1 zeigt.

Der Rollbalg 1 mit seinen beiden Rollbalgteilen 1a und 1b ist zwischen den beiden Anschlussteilen 4 (Abrollkolben) und 5 (Luftfederdeckel) befestigt und bildet unter Befüllung mit Druckluft eine dem Anschlussteil 4 benachbarte Rollfalte 6 und eine sich daran anschließende Luftfederkammer 7 ausbildet.

Der größte Durchmesser 2a des einen Rollbalgteils 1a und der kleinste Durchmesser 3a des zweiten Rollbalgteils 1b sind im Bereich der Verbindung 8 der Rollbalgteile im Wesentlichen gleich groß und können damit leicht miteinander verbunden werden.

Damit ist im Wesentlichen das Rollbalgteil 1a im Bereich der Rollfalte 6 und das zweite Rollbalgteil 1b im Bereich der Luftfederkammer 7 angeordnet.

Die beiden Rollbalgteile 1a und 1b sind mit einer Klemmverbindung 8 miteinander verbunden.

Nicht näher dargestellt, weil an sich bekannt, sind hier die in der Rollbalgwand angeordneten Festigkeitsträger. Die Rollbalgteile weisen jeweils zwei innerhalb der Rollbalgwand angeordnete Lagen von Festigkeitsträgern auf, wobei die Festigkeitsträger der einzelnen Lagen in einem Winkel zur Rollbalgachse ausgerichtet sind. Die Festigkeitsträger der Rollbalgteile 1a und 1b weisen dabei zueinander unterschiedliche Fadenwinkel, jedoch die gleich Anzahl von Fadenlagen auf.

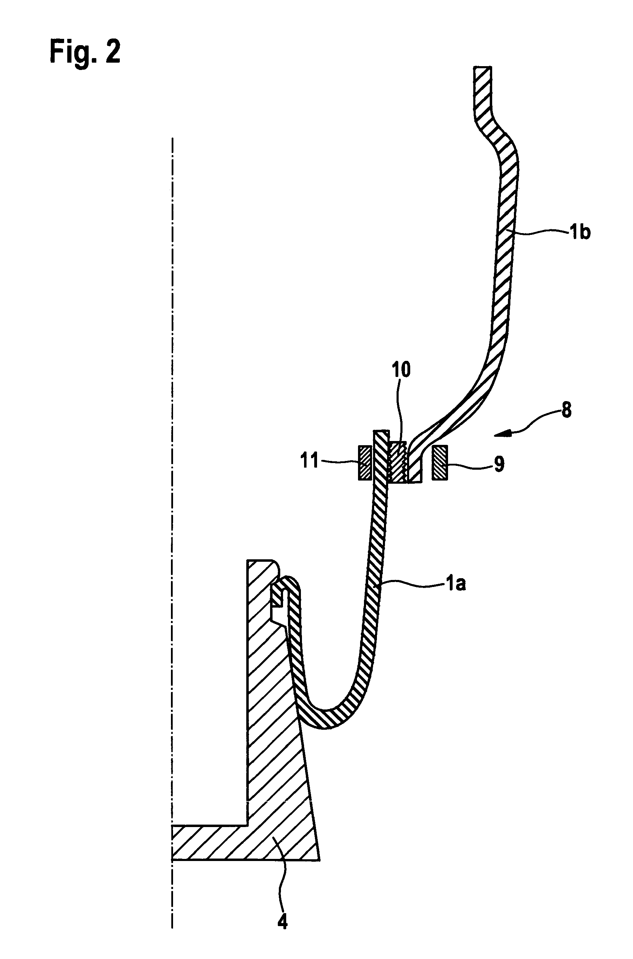

Fig. 2 zeigt einen vergrößerten Ausschnitt des Verbindungsbereiches und der Verbindung 8 zwischen den beiden Rollbalgteilen eines erfindungsgemäßen Luftfeder-Rollbalgs gemäß Fig. 1 im Schnitt. Die hier angeordnete Klemmverbindung besteht aus einem äußeren Klemmring 9, einem mittleren gezahnten Zwischenring 10 und einem inneren, in seinem Durchmesser entsprechend komplementär ausgebildeten Gegenring 11. Die Ringe können in einem Schritt ohne komplizierte Werkzeuge vercrimpt, d.h. radial miteinander verpresst werden.

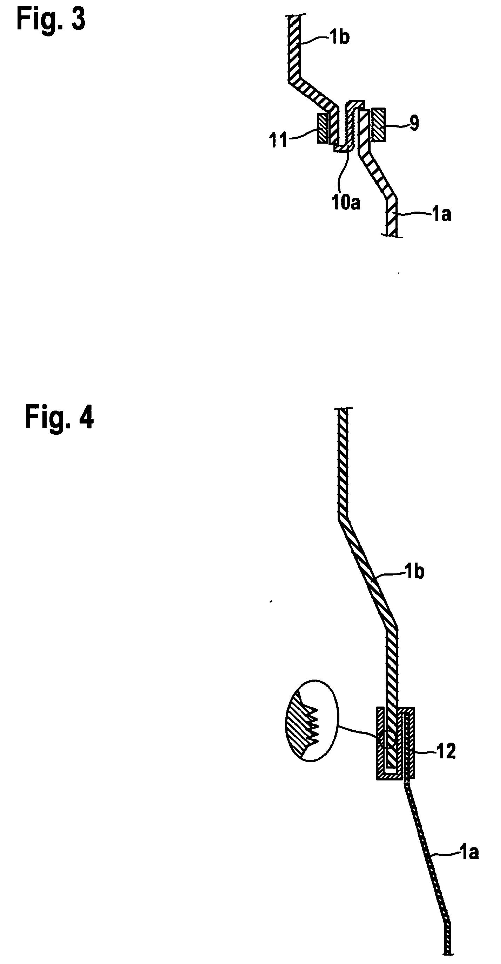

Fig. 3 zeigt eine weitere Ausführung einer Klemmverbindung gemäß Fig. 2 im Schnitt. Diese Ausführung besteht wieder aus einem äußeren Klemmring 9 und einem inneren, in seinem Durchmesser entsprechend komplementär ausgebildeten Gegenring 11. Der mittlere gezahnten Zwischenring 10a weist an seinen Endbereichen jeweils einen nach innen bzw. nach außen gebogenen Kragen auf, wodurch eine einfachere Positionierung bei der Montage möglich wird.
Fig. 4 zeigt eine Ausführung einer einteiligen Klemmverbindung der beiden Rollbalgteile eines erfindungsgemäßen Luftfeder-Rollbalgs im Schnitt wobei die Klemmverbindung als einteiliger und S-förmiger die jeweiligen Enden der Rollbalgteile 1a und 1b umfassender Klemmring 12 ausgebildet ist. Auch dieser einteilige Klemmring kann in einem Schritt ohne komplizierte Werkzeuge vercrimpt, d.h.seine S-förmigen Schenkel radial miteinander verpresst werden.

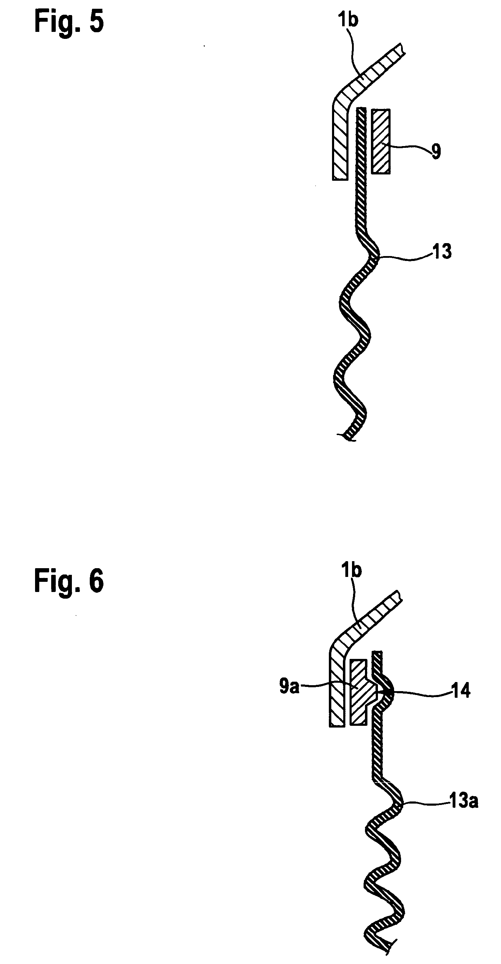

Fig. 5 zeigt eine Ausführung einer Klemmverbindung der beiden Rollbalgteile 1a und 1b eines erfindungsgemäßen Luftfeder-Rollbalgs, bei der die Klemmverbindung so ausgebildet ist, dass ein Ende eines Faltenbalges ebenfalls im Verbindungsbereich befestigt ist. Dabei wird das Ende des Faltenbalges 13 einfach mit unter den äußeren Klemmring 9 geschoben und ebenfalls radial in die Verbindung mit eingepresst (Zwischenring 10 und Innenring 11 sind hier nicht dargestellt).
Fig. 6 zeigt eine weitere Ausführung einer Klemmverbindung der beiden Rollbalgteile eines erfindungsgemäßen Luftfeder-Rollbalgs mit ebenfalls befestigtem Faltenbalg im Schnitt. Hier ist der Faltenbalg 13a lediglich über einen nach außen gerichteten Vorsprung 14 des äußeren Klemmrings 9a geschoben und somit durch eine Schnappverbindung mit befestigt. Hierzu weist der Faltenbalg 13a eine komplementär zum nach außen gerichteten Vorsprung 14 ausgebildete Vertiefung auf.

### Bezugszeichenliste

### (Teil der Beschreibung)

- 1: Luftfeder-Rollbalg
- 1a, 1b: Rollbalgteil
- 2: Wirksamer Durchmesser (Rollbalgteil 1a)
- 2a: größter Durchmesser des Rollbalgteils 1a
- 3: Wirksamer Durchmesser (Rollbalgteil 1b)
- 3a: größter Durchmesser des Rollbalgteils 1b
- 4: Anschlussteil (Abrollkolben)
- 5: Anschlussteil (Luftfederdeckel)
- 6: Rollfalte
- 7: Luftfederkammer
- 8: Verbindung
- 9: Äußerer Klemmring
- 9a: Äußerer Klemmring
- 10: Zwischenring
- 10a: Zwischenring
- 11: Innenring
- 12: S-förmiger Klemmring
- 13: Faltenbalg
- 13a: Faltenbalg
- 14: Vorsprung

## Patentansprüche

1. Luftfeder-Rollbalg (1), der zwischen zwei Anschlussteilen befestigt ist und unter Befüllung mit Druckluft eine einem Anschlussteil benachbarte Rollfalte (6) und eine sich daran anschließende Luftfederkammer (7) ausbildet, wobei der Rollbalg (1) aus zwei miteinander verbundenen schlauchförmigen Rollbalgteilen (1a, 1b) zusammengesetzt ist, die Rollbalgteile (1a, 1b) unterschiedliche Durchmesser (2, 3) aufweisen und mit einer Klemmverbindung (8) miteinander verbunden sind **dadurch gekennzeichnet, dass** der Rollbalg (1) innerhalb der Rollbalgwand angeordnete Lagen von Festigkeitsträgern aufweist, deren einzelne Lagen in einem Winkel zur Rollbalgachse ausgerichtet sind, , wobei die Festigkeitsträger der Rollbalgteile (1a, 1b) unterschiedliche Fadenwinkel aufweisen.

2. Luftfeder-Rollbalg nach Anspruch 1, **dadurch gekennzeichnet, dass** ein Rollbalgteil (la) im Bereich der Rollfalte (6) und das zweite Rollbalgteil (1b) im Bereich der Luftfederkammer (7) angeordnet ist.

3. Luftfeder-Rollbalg nach einem der Ansprüche 1 oder 2, **dadurch gekennzeichnet, dass** die Rollbalgteile (1a, 1b) unterschiedliche Anzahlen von Fadenlagen aufweisen.

4. Luftfeder-Rollbalg nach einem der Ansprüche 1 bis 3, **dadurch gekennzeichnet, dass** die Rollbalgteile (1a, 1b) aus unterschiedlichen Gummimaterialien bestehen.

5. Luftfeder-Rollbalg nach einem der Ansprüche 1 bis 4, **dadurch gekennzeichnet, dass** die Klemmverbindung (8) aus einem Klemmring (9) und einem oder mehreren entsprechenden Gegenringen (10, 11) besteht.

6. Luftfeder-Rollbalg nach Anspruch 5, **dadurch gekennzeichnet, dass** die Klemmverbindung (8) als einteiliger und S-förmiger die jeweiligen Enden der Rollbalgteile (1a, 1b) umfassender Klemmring (12) ausgebildet ist

7. Luftfeder-Rollbalg nach Anspruch 5 oder 6 , **dadurch gekennzeichnet, dass** die Klemmringe (10, 10a, 12) eine Konturierung oder Zahnung aufweisen.

8. Luftfeder-Rollbalg nach einem der Ansprüche 1 bis 7, **dadurch gekennzeichnet, dass** die Klemmverbindung (8) so ausgebildet ist, dass ein Ende eines Faltenbalges (13, 13a) ebenfalls im Verbindungsbereich befestigt ist.

9. Luftfeder für ein Kraftfahrzeug mit einem Luftfeder-Rollbalg nach einem der Ansprüche 1 bis 8.

## Claims

1. Air spring rolling bellows (1) which is fastened between two connection parts and, under filling with compressed air, forms a rolling fold (6) adjacent to one connection part and an air spring chamber (7) adjoining said fold, wherein the rolling bellows (1) is composed of two interconnected hose-like rolling bellows parts (1a, 1b), and the rolling bellows parts (1a, 1b) have different diameters (2, 3) and are connected to one another by a clamping connection (8), **characterized in that** the rolling bellows (1) has plies of reinforcing elements arranged within the rolling bellows wall, the individual plies of which elements are oriented at an angle to the axis of the rolling bellows, wherein the reinforcing elements of the rolling bellows parts (1a, 1b) have different thread angles.

2. Air spring rolling bellows according to Claim 1, **characterized in that** one rolling bellows part (1a) is arranged in the region of the rolling fold (6) and the second rolling bellows part (1b) is arranged in the region of the air spring chamber (7).

3. Air spring rolling bellows according to either of Claims 1 and 2, **characterized in that** the rolling bellows parts (1a, 1b) have different numbers of thread plies.

4. Air spring rolling bellows according to one of Claims 1 to 3, **characterized in that** the rolling bellows parts (1a, 1b) consist of different rubber materials.

5. Air spring rolling bellows according to one of Claims 1 to 4, **characterized in that** the clamping connection (8) consists of one clamping ring (9) and one or more corresponding counter-rings (10, 11).

6. Air spring rolling bellows according to Claim 5, **characterized in that** the clamping connection (8) is designed as a one-part and S-shaped clamping ring (12) which encloses the respective ends of the rolling bellows parts (1a, 1b).

7. Air spring rolling bellows according to Claim 5 or 6, **characterized in that** the clamping rings (10, 10a, 12) have a contouring or toothing.

8. Air spring rolling bellows according to one of Claims 1 to 7, **characterized in that** the clamping connection (8) is designed such that one end of a bellows (13, 13a) is also fastened in the connection region.

9. Air spring for a motor vehicle comprising an air spring rolling bellows according to one of Claims 1 to 8.

## Revendications

1. Soufflet déroulant (1) pour amortisseur pneumatique, fixé entre deux pièces de raccordement et formant lorsqu'il est rempli d'air comprimé un pli déroulant (6) voisin d'une pièce de raccordement et raccordé à une chambre (7) de l'amortisseur pneumatique,
le soufflet déroulant (1) étant constitué de l'assemblage de deux parties (1a, 1b) de soufflet déroulant, en forme de tube flexible, reliées l'une à l'autre, les parties (1a, 1b) du soufflet déroulant présentant des diamètres (2, 3) différents et étant reliées l'une à l'autre par une liaison serrée (8), **caractérisé en ce que**
le soufflet déroulant (1) présente des couches de renfort disposées à l'intérieur de la paroi du soufflet déroulant, les différentes couches étant orientées obliquement par rapport à l'axe du soufflet déroulant et **en ce que**
les renforts des parties (1a, 1b) du soufflet déroulant présentent des angles de fil différents.

2. Soufflet déroulant pour amortisseur pneumatique selon la revendication 1, **caractérisé en ce qu'**une partie (la) du soufflet déroulant est disposée au niveau du pli déroulant (6) et la deuxième partie (1b) du soufflet déroulant au niveau de la chambre (7) de l'amortisseur pneumatique.

3. Soufflet déroulant pour amortisseur pneumatique selon l'une des revendications 1 ou 2, **caractérisé en ce que** les parties (1a, 1b) du soufflet déroulant présentent des nombres différents de couches de fil.

4. Soufflet déroulant pour amortisseur pneumatique selon l'une des revendications 1 à 3, **caractérisé en ce que** les parties (1a, 1b) du soufflet déroulant sont constituées de matériaux de caoutchouc différents.

5. Soufflet déroulant pour amortisseur pneumatique selon l'une des revendications 1 à 4, **caractérisé en ce que** la liaison serrée (8) est constituée d'une bague de serrage (9) et d'une ou plusieurs contre-bagues (10, 11) correspondantes.

6. Soufflet déroulant pour amortisseur pneumatique selon la revendication 5, **caractérisé en ce que** la liaison serrée (8) est configurée comme bague de serrage (12) d'un seul tenant et en forme de S qui entoure les extrémités respectives des parties (1a, 1b) du soufflet déroulant.

7. Soufflet déroulant pour amortisseur pneumatique selon les revendications 5 ou 6, **caractérisé en ce que** les bagues de serrage (10, 10a, 12) présentent une profilation ou une denture.

8. Soufflet déroulant pour amortisseur pneumatique selon l'une des revendications 1 à 7, **caractérisé en ce que** la liaison serrée (8) est configurée de telle sorte qu'une extrémité d'un soufflet plissé (13, 13a) est également fixée au niveau de la liaison.

9. Amortisseur pneumatique pour véhicule automobile, doté d'un soufflet déroulant d'amortisseur pneumatique selon l'une des revendications 1 à 8.
